# FASCICULE DE BREVET EUROPEEN

(11) **EP 0 447 309 B1**
(45) Date de publication et mention de la délivrance du brevet: **17.07.1996**
(21) Numéro de dépôt: 91400659.8
(22) Date de dépôt: 11.03.1991
(51) Int. Cl.: C08F 283/00, C08G 18/63

(54) **Plaques coulées â haute résistance au choc, leur procédé de fabrication**
Hochschlagfeste Gussplatte und Verfahren zu ihrer Herstellung
High impact resistance cast plates, their process for manufacture

(30) Priorité: 15.03.1990 FR 9003321
(43) Date de publication de la demande: 18.09.1991
(73) Titulaire: ELF ATOCHEM S.A., F-92800 Puteaux (FR)
(72) Inventeur: Avenel, Michel, F-27140 Gisors (FR)

(56) Documents cités:
- EP-A- 0 272 975
- FR-A- 2 029 469
- FR-A- 2 204 651
- POLYMER, 1973, vol. 14, December, pp. 597-603, G. Allen et al.

## Description

La présente invention se rapporte à des plaques coulées à base de polyuréthanne et de polyméthacrylate de méthyle comportant de faibles teneurs en polyuréthanne, présentant une haute résistance au choc ainsi que de bonnes propriétés optiques. Elle concerne également leur procédé de fabrication.

On connait par le brevet GB-A-1 239 701 et FR-A-2 029 469 un procédé de fabrication de plaques coulées transparentes à base de polyméthacrylate de méthyle et de polyuréthanne, ledit procédé consistant dans un premier temps, à introduire dans un moule un mélange comprenant au moins un monomère vinylique et des précurseurs de polyuréthanne réticulé libres de tout groupe fonctionnel copolymérisable avec le(s) monomère(s) vinylique(s) (c'est-à-dire au moins un polyol et au moins un composé organique contenant au moins deux fonctions isocyanates), dans des proportions telles que le rapport des composants du réseau polyuréthanne à la somme de ces composants et du (ou des) monomère(s) vinylique(s) soit compris entre 5% et 95% en poids, puis dans un second temps, à soumettre le moule à des conditions de température et de pression permettant la formation successive du polyuréthanne, puis celle du polyméthacrylate de méthyle en présence dudit polyuréthanne.

La demande de brevet EP-A-272 975 décrit un procédé pour fabriquer des plaques coulées à haute résistance au choc, à base de polyméthacrylate de méthyle et de polyuréthane dans lequel le rapport des composants du réseau polyuréthane à la somme de ces composants et du méthacrylate de méthyle est compris entre 5 et 35 % en poids.

Si ces documents, précédemment cités, mentionnent que des plaques coulées peuvent contenir une teneur en polyuréthane supérieure à 5 % en poids, aucun n'illustre précisément des plaques à faible teneur en polyuréthane, inférieure à 10 % en poids.

Les propriétés mécaniques des plaques coulées à base de polyméthacrylate et de polyuréthane décrites dans l'art antérieur, varient en fonction de la teneur en polyuréthane. Notamment, lorsque la teneur en polyuréthane augmente, la résistance au choc augmente. Par contre, le module de flexion et la tenue à la chaleur (évaluée par la température de Vicat) diminuent.

Des plaques coulées à teneur faible en polyuréthane sont intéressantes par le fait qu'elles sont plus stables au vieillissement.

La Société Déposante a maintenant découvert que, contrairement à l'enseignement de l'état de la technique, certaines compositions à base de polyméthacrylate de méthyle comportant de faibles teneurs en polyuréthane pouvaient présenter des résistances au choc équivalentes ou supérieures à celles obtenues pour des compositions identiques comportant des teneurs en polyuréthane plus élevées, ce qui offre par conséquent l'avantage de procurer un excellent compromis entre la résistance au choc, la température de Vicat et le module de flexion.

La présente invention a donc pour premier objet une plaque coulée obtenue à partir d'une composition de polyméthacrylate de méthyle et de polyuréthane en proportions telles que le rapport des composants du réseau polyuréthane (c'est-à-dire la somme du (ou des) composé(s) organique(s) à fonctions isocyanates et du (ou des) polyol(s)) à la somme de ces composants et du méthacrylate de méthyle soit compris entre 3 % et 8 % en poids environ.

Toute composition selon l'invention présente, dans la gamme de 3 % à 8 % en poids environ, au moins un point singulier pour lequel la résistance au choc, et notamment la résistance au choc Charpy non entaillé, atteint une valeur nettement supérieure aux compositions ayant des teneurs en polyuréthane inférieures à 3 % en poids ou immédiatement supérieures à 8 % en poids.

Avec ces gammes de 3 à 8 % en poids environ de polyuréthane, les plaques coulées présentent des températures de Vicat élevées, supérieures ou égales à 100°C et des modules de flexion supérieurs ou égaux à 2000 MPa.

La composition exacte correspondant à ce point singulier est fonction d'un certain nombre de critères, parmi lesquels on citera entre autres l'épaisseur de la plaque coulée ainsi que la nature des composants, principalement celle du (ou des) polyol(s) et la présence ou non de monomères acryliques autres que le méthacrylate de méthyle.

Un second objet de la présente invention consiste en un procédé de fabrication de plaques coulées à haute résistance au choc comprenant les étapes suivantes :
- dans une première étape on prépare séparément d'une part une solution (A) de méthacrylate de méthyle comprenant une quantité efficace d'au moins un initiateur de polymérisation radicalaire, une quantité efficace d'au moins un composé organique comportant au moins deux fonctions isocyanates, au moins un polyol susceptible de constituer un réseau polyuréthanne élastomérique avec les fonctions isocyanates du composé organique, et d'autre part une solution (B) de méthacrylate de méthyle comprenant une quantité efficace d'au moins un agent de réticulation du méthacrylate et une quantité efficace d'au moins un catalyseur susceptible de permettre la formation dudit réseau polyuréthanne, puis
- dans une seconde étape on mélange les solutions (A) et (B), puis
- dans une troisième étape on introduit le mélange obtenu au cours de la seconde étape dans un moule, puis
- dans une quatrième étape on soumet le moule contenant le mélange des solutions (A) et (B) à des conditions de pression et température propres à permettre successivement la formation du réseau polyuréthanne puis la polymérisation du méthacrylate de méthyle dans ledit réseau, et
- dans une dernière étape on laisse refroidir le mélange polymérisé dans le moule avant de procéder au démoulage de la plaque coulée.
caractérisé en ce que le rapport des composants du réseau polyuréthane (c'est-à-dire la somme du (ou des) composé(s) organique(s) à fonctions isocyanates et du (ou des) polyol(s) la somme de ces composants et du méthacrylate de méthyle) soit compris entre 3 % et 8 % en poids environ.

Il est à noter que les formulations des deux solutions (A) et (B) mentionnées ci-dessus ne sont pas rigides et qu'il est possible de déplacer un ou plusieurs constituants d'une solution vers l'autre sous réserve de ne pas retrouver dans la même solution la totalité des constituants nécessaires à la formation dudit réseau polyuréthane, à savoir le catalyseur de formation dudit réseau, le(s) polyol(s), le(s) composé(s) organique(s) à fonctions isocyanates.

La solution (A) préparée au cours de la première étape du procédé selon l'invention comprend :
- du méthacrylate de méthyle ;
- un initiateur de polymérisation radicalaire pouvant être notamment choisi parmi les persulfates, les peroxydes, les hydroperoxydes et les composés diazoïques tels que par exemple l'azobis-isobutyronitrile, le 1,1'-azobis(2-méthylbutyronitrile), le 2,2'-azobis(2,4-diméthylvaléronitrile), le 1,1'-azobis-1-cyclohexanecarbonitrile, le perbenzoate de tertiobutyle et le peroxy-isopropylcarbonate de tertio-butyle ; lorsqu'un persulfate de métal alcalin est choisi en tant qu'initiateur, il peut être utilisé en combinaison avec au moins un réducteur choisi parmi les polyhydrophénols, le sulfite et le bisulfite de sodium, le diméthylaminopropionitrile, les diazomercaptans et les ferricyanures. L'initiateur et, le cas échéant, le réducteur sont utilisables à raison d'environ 0,01 à 2% chacun en poids par rapport à la quantité totale du méthacrylate de méthyle présent dans les solutions (A) et (B) ;
- un composé organique comportant au moins deux fonctions isocyanates. Ce composé peut être difonctionnel, trifonctionnel ou même d'une fonctionnalité supérieure. Il peut être aliphatique, cycloaliphatique ou aromatique ou même comprendre des groupes de plusieurs de ces catégories. Parmi des exemples de tels composés on peut citer des diisocyanates de structure

   OCN - R - NCO,

   dans laquelle R est une chaîne alkylène possédant de 4 à 8 atomes de carbone, et leurs oligomères, ainsi que le 4,4'-diphénylméthane diisocyanate, les 2,4-et 2,6-toluène diisocyanates, l'isophorone diisocyanate, le 4,4'-dicyclohexylméthane diisocyanate et l'hexaméthylène diisocyanate trimérisé ;
- un polyol susceptible de réagir avec les fonctions isocyanates du composé organique présent dans la solution (A) pour former, dans certaines conditions, un réseau poluréthanne élastomérique. Un tel polyol peut être choisi parmi les polyéthers glycols et les polyesters glycols et a de préférence un poids moléculaire au moins égal à 1 000 et une fonctionnalité supérieure ou égale à deux.

La solution (A) peut comprendre en outre une quantité efficace d'au moins un agent ignifugeant, tel que notamment le méthacrylate de tribromophényle, le chlorure de vinylidène, ou des composés organophosphorés comme ceux décrits dans les brevets EP-A-117 174 et FR-A-2 567 127, et/ou au moins un pigment soluble dans le méthacrylate de méthyle. Elle peut également comprendre au moins un comonomère éthyléniquement insaturé copolymérisable avec le méthacrylate de méthyle, tel que par exemple le styrène, l'α-méthylstyrène, le tertiobutylstyrène, l'acrylate de n-butyle, l'acrylate de 2-éthylhexyle, le méthacrylate de n-butyle et le vinyltoluène. Elle peut également comprendre une quantité efficace d'au moins un agent démoulant choisi par exemple parmi l'acide stéarique, le dioctylsulfosuccinate de sodium et les esters phosphoriques organiques. Cet agent démoulant est généralement utilisé à raison d'environ 0,01% à 2% en poids par rapport à la quantité totale de méthacrylate de méthyle présent dans les solutions (A) et (B). La présence d'un tel agent démoulant est plus particulièrement recommandée lorsque le moule utilisé à partir de la troisième étape est constitué d'un verre minéral et/ou lorsque l'on désire obtenir des plaques planes transparentes possédant un parfait état de surface.

La solution (B) préparée au cours de la première étape du procédé selon l'invention comprend :
- du méthacrylate de méthyle,
- au moins un agent réticulant en quantité suffisante, plus particulièrement en quantité au moins égale à environ 0,1% en poids et de préférence au plus égale à 5% en poids par rapport à la quantité totale de méthacrylate de méthyle présent dans les solutions (A) et (B). Comme agent réticulant on peut utiliser par exemple :

1) des composés ayant au moins deux doubles liaisons polymérisables et,
2) des composés ayant au moins une double liaison polymérisable et au moins un groupe fonctionnel réactif avec le méthacrylate de méthyle et, le cas échéant, son comonomère.

Comme exemples des composés répertoriés en premièrement ci-dessus, ayant au moins deux doubles liaisons polymérisables, on peut citer :
a) les composés di- ou polyvinyliques, tels que notamment le divinylbenzène, le divinyltoluène, le divinylxylène, l'éther divinylique, la divinylcétone et le trivinylbenzène,
b) les di- ou polyesters d'acides mono- ou polycarboxyliques insaturés avec des polyols, tels que les esters des acides di- ou tri(méth)acryliques avec des polyols (tels que l'éthylène glycol, la triméthylolpropane, le glycérol, les polyoxyéthylèneglycols et les polyoxypropylèneglycols), les polyesters insaturés (que l'on peut obtenir par réaction de l'un quelconque des polyols précités avec un acide insaturé tel que l'acide maléique),
c) les bis (méth)acrylamides tels que la N,N-méthylène-bis-acrylamide,
d) les esters carbamyliques que l'on peut obtenir en faisant réagir des polyisocyanates (tels que le toluène diisocyanate, l'hexaméthylène diisocyanate et le 4,4'-diphénylmèthanediisocyanate, et les prépolymères contenant un groupe NCO obtenus en faisant réagir un tel diisocyanate avec des composés contenant des atomes d'hydrogène actifs) avec des monomères contenant des groupes hydroxyles. De tels esters sont notamment ceux des acides di(méth)-acryliques que l'on peut obtenir en faisant réagir les diisocyanates précités avec le (méth)acrylate d'hydroxyéthyle.
e) les éthers di- ou poly(méth)allyliques de polyols tels que les alkylèneglycols, le glycérol, les polyalkylèneglycols, les polyoxyalkylènepolyols et les hydrates de carbone, tels que l'éther diallylique du polyéthylène glycol, l'amidon allylé et la cellulose allylée,
f) les esters di- ou polyallyliques d'acides polycarboxyliques tels que le phtalate de diallyle et l'adipate de diallyle, et
g) les esters d'acides mono- ou polycarboxyliques insaturés avec des éthers mono(méth)allyliques de polyols, tels que l'ester de l'acide (méth)acrylique avec l'éther monoallylique du polyéthylène glycol.

Comme composés répertoriés en deuxièmement ci-dessus, ayant au moins une double liaison polymérisable et au moins un groupe fonctionnel réactif avec le méthacrylate de méthyle et, le cas échéant, son comonomère, on peut citer la N-méthylol(méth)acrylamide et le (méth)acrylate de glycidyle,
- un catalyseur capable de favoriser la formation du réseau polyuréthanne lorsque le polyol entre en contact du composé à fonctions isocyanates. Pour que, quelles que soient les conditions de température au moment du contact, la formation du réseau acrylique ne soit pas initée prématurément, il est souhaitable que ce catalyseur soit choisi de manière à ne pas former un couple Redox avec l'initiateur de polymérisation du méthacrylate de méthyle. Ce catalyseur, dont on peut citer à titre d'exemple l'octoate stanneux et le dibutyl dilaurate d'étain, est de préférence utilisé dans une proportion comprise entre 0,1% et 15% environ par rapport à la somme du polyol et du composé à fonctions isocyanates.

La solution (B) peut comprendre en outre:
- au moins un pigment dispersible dans le méthacrylate de méthyle,
- une quantité efficace d'au moins un ignifugeant tel que ceux déjà décrits précédemment,
- une quantité efficace d'au moins un limiteur de chaîne pouvant notamment être choisi parmi les terpènes monocycliques diinsaturés et les terpènes bicycliques mono-insaturés, de préférence en proportion comprise entre 0,005 et 1% environ en poids par rapport à la quantité totale de méthacrylate de méthyle présent dans les solutions (A) et (B),
- une quantité efficace d'au moins un protecteur contre l'action du rayonnement ultraviolet, de préférence choisi de manière à ne pas être susceptible de réagir avec les constituants et/ou avec le catalyseur permettant la formation du réseau polyuréthanne. Ce protecteur sera de préférence utilisé dans une proportion comprise entre 0,03% et 2% environ par rapport au méthacrylate de méthyle,
- au moins un peroxyde organique réputé être un agent vulcanisant du polyuréthanne tel que, par exemple, le peroxyde de dicumyle, le peroxyde de tertiobutylcumyle ou le peroxyde de tertiobutyle, et ce dans des proportions comprises de préférence entre 0,002 et 0,5% en poids par rapport au réseau acrylique.

Elle peut également comprendre au moins un comonomère éthyléniquement insaturé copolymérisable avec le méthacrylate de méthyle, tel que défini précédemment.

Lorsqu'un (des) commonomère(s) du méthacrylate de méthyle est (sont) ajouté(s) dans la solution (A) et/ou dans la solution (B), il(s) est (sont) présent(s) en une proportion totale de préférence au plus égale à 20% en poids par rapport à la quantité totale de méthacrylate de méthyle présent dans les solutions (A) et (B).

Il peut être souhaitable, notamment pour éviter que des bulles d'air ne soient occluses dans les plaques coulées (nuisant ainsi à leur transparence), que l'une et/ou l'autre des solutions (A) et (B) soit dégazée sous vide partiel, par exemple sous une pression de 25 à 250 millibars.

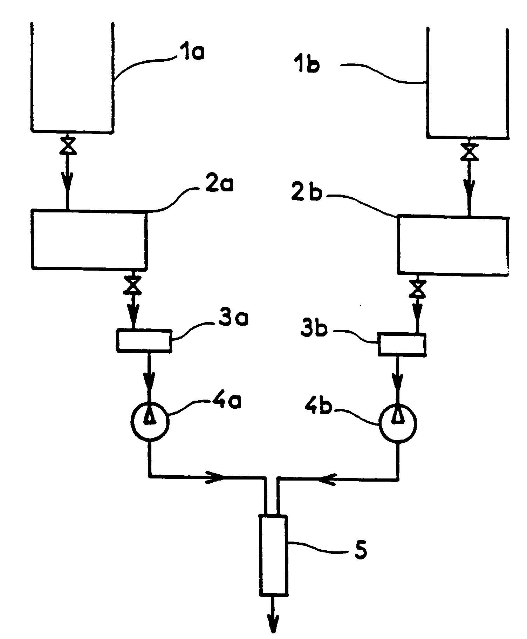

Après avoir été préparées séparément au cours de la première étape, les deux solutions (A) et (B) sont mélangées, puis leur mélange est introduit dans un moule, par exemple au moyen de l'installation représentée sur la figure en annexe. Cette installation comprend des mélangeurs (1a) et (1b) dans lesquels sont respectivement préparées les solutions (A) et (B), des désaérateurs (2a) et (2b) dans lesquels les solutions ainsi préparées sont dégazées, des filtres (3a) et (3b) pour la séparation des particules solides éventuellement présentes dans les solutions dégazées, et des pompes doseuses (4a) et (4b) au moyen desquelles les quantités désirées des solutions (A) et (B) dégazées et filtrées sont envoyées vers le mélangeur statique (5).

Pour favoriser le démoulage de la plaque coulée, il peut être souhaitable de prévoir un moule constitué d'un verre minéral traité de manière à éviter une réaction entre les fonctions Si-O du verre et les fonctions NCO de l'isocyanate, par exemple un verre minéral revêtu d'une couche minérale, telle qu'une couche d'oxyde métallique, durcie par pyrolyse.

Pour éviter que la formation du réseau polyuréthanne élastomérique et/ou la polymérisation du méthacrylate ne commencent avant le moment souhaité, il peut être avantageux d'utiliser un moule constitué d'un matériau permettant d'éviter la photocatalyse de polymérisation de l'un ou l'autre des monomères présents. Le moule utilisé pour la mise en oeuvre du procédé selon la présente invention doit par ailleurs résister à la température maximale du mélange réactionnel et être non réactif ou insoluble au contact de la charge liquide. Des moules appropriés sont réalisés à partir de substances telles que, par exemple, le polyéthylène, le polypropylène, le polyéthylène téréphtalate, des élastomères de silicone et des métaux comme par exemple l'aluminium, le nickel ou des alliages comme le laiton ou l'acier inoxydable. Un moule en métal sera plus particulièrement adapté lorsque le procédé selon l'invention est mis en oeuvre de manière continue, par exemple dans une installation du type laminoir.

Lorsque tous les composants du système sont dans le moule, on soumet celui-ci à des conditions, notamment de température et de pression, telles que le réseau polyuréthanne se forme d'abord par réaction entre les fonctions -OH du polyol et les fonctions N-CO de l'isocyanate puis le méthacrylate de méthyle polymérise dans ledit réseau, formant ainsi ce qu'il est convenu de nommer un réseau interpénétré. En effet les deux réseaux macromoléculaires, celui de polyméthacrylate de méthyle et celui de polyuréthanne, sont interpénétrés physiquement et substantiellement sans liaisons chimiques. Bien qu'on ne puisse pas exclure que quelques réactions de transfert intermacromoléculaires n'aient pas lieu, on peut affirmer que, grâce au procédé selon l'invention, ces réactions indésirées sont si peu nombreuses qu'elles n'affectent pas la possibilité d'obtenir simultanément d'excellentes propriétés optiques (en particulier la transparence lumineuse) et une excellente résistance au choc. Des conditions utilisables sont par exemple:
- en ce qui concerne la pression, une pression égale à la pression atmosphérique ou bien une pression pouvant atteindre jusqu'à 5 bars environ, ou encore une pression réduite jusqu'à 0,35 bar environ.
- en ce qui concerne la température, celle-ci pourra être choisie dans une gamme allant de 30°C à 135°C environ, lorsque la pression est la pression atmosphérique. La température du moule pourra être augmentée progressivement, par exemple par paliers, à l'intérieur de cette gamme. De manière plus générale, il pourra être avantageux de prévoir un programme de température non uniforme dans le temps, c'est-à-dire comportant plusieurs étapes de différentes durées et conduites à différentes températures. La durée du cycle de température dépend de l'épaisseur de la plaque.

On notera qu'en dehors du procédé de fabrication préférentiel qui vient d'être décrit ci-dessus, il existe également d'autres procédés de fabrication des plaques coulées selon l'invention dont notamment:
- la formation partielle du réseau polyuréthanne dans la méthacrylate de méthyle non catalysé, ceci thermiquement ou non puis l'adjonction de l'initiateur nécessaire à la formation du réseau acrylique, le mélange réactionel étant alors soumis à un dégazage avant d'être coulé dans un moule puis polymérisé thermiquement.
- la formation partielle du réseau polyuréthanne dans une partie du méthacrylate de méthyle non catalysé, puis l'addition du complément de méthacrylate de méthyle, l'adjonction de l'initiateur nécessaire à la formation du réseau acrylique, le mélange réactionnel étant alors soumis à un dégazage, puis coulé dans un moule avant d'être polymérisé thermiquement.

Le procédé selon la présente invention permet la fabrication de plaques coulées ayant une épaisseur comprise entre 1,5 et 25 mm environ. De telles plaques trouvent une application particulièrement importante dans la réalisation de vitrages utiles dans les différents secteurs de la sécurité civile. Secondairement, après pliage ou cintrage, ces plaques peuvent également être utilisées dans le domaine de l'orthopédie externe.

Les exemples non limitatifs suivants sont donnés afin de mieux illustrer l'objet de l'invention. Sauf exception, toutes les quantités sont exprimées en poids.

### EXEMPLE 1 :

Dans une installation telle que celle représentée sur la figure en annexe on prépare, à la température de 20°C et sous agitation :
- d'une part une solution (A) comprenant 993 parties de méthacrylate de méthyle, 1 partie d'acide stéarique, 68,7 parties de polytétraméthylène éther glycol commercialisé par la société DU PONT DE NEMOURS sous la marque TERATHANE® 2000, 17,7 parties d'hexaméthylène diisocyanate trimérisé commercialisé par la société BAYER sous la marque DESMODUR® N100, 0,82 partie d'azo-bis-isobutyronitrile, 0,41 partie de 2,2′-azo-bis-(2,4-diméthylvaléronitrile) commercialisé par la société WAKO sous la marque V65 et 0,41 partie 1,1′-azo-bis-(1-cyclohexane carbonitrile) commercialisé par la société WAKO sous la marque V40,
- d'autre part par une solution (B) comprenant 1 007 parties de méthacrylate de méthyle, 0,2 partie de terpinolène, 24 parties de bis(2,2,6,6-tétraméthyl-4-pipéridyl) sébacate commercialisé par la société CIBA-GEIGY sous la marque TINUVIN® 770 DF, 41 parties de diacrylate de butanediol, et 10 parties de dibutyl dilaurate d'étain.

Ces deux solutions sont dégazées puis mélangées à poids égal avant d'être coulées dans un moule constitué de deux plaques de verre de dimensions 600 x 800 x 8 mm et d'un joint en polychlorure de vinyle d'épaisseur 5,6 mm, l'assemblage étant réalisé à l'aide de pinces. Ce moule est plongé dans un bac de polymérisation réglé à la température de 30°C. La température de ce bac est d'abord maintenue à 30°C pendant 30 minutes, puis portée à 60°C en 45 minutes et maintenue à cette valeur pendant 4 heures et 30 minutes. Le moule est alors transféré dans une étuve à air où la température est portée à 115°C en 1 heure et maintenue à cette valeur pendant 2 heures. On ramène ensuite la température à 50°C et on maintient celle-ci à cette valeur pendant 30 minutes, avant de procéder à l'amorçage puis au démoulage. On obtient ainsi une plaque coulée d'épaisseur 4 mm comprenant 4% en poids de polyuréthanne pour la préparation référencée (1a) définie ci-dessus.

Selon le procédé défini ci-dessus, on réalise en parallèle une série de préparations référencées (1b) à (1i) en modifiant les quantités des différents constituants de base de manière à obtenir des plaques coulées dont les teneurs en polyuréthanne (données dans le Tableau 1 ci-après) varient de 5% à 22% en poids.

Les propriétés mesurées sont :
- la température de Vicat B déterminée selon la norme AFNORT T 51021.
- le choc Charpy non entaillé déterminé selon la norme AFNORT T 51035.
- module de flexion déterminée suivant la norme ISO R 378, (INSTRON 1185).

Les résultats obtenus sont regroupés dans le Tableau 1 ci-après les essais (1f) à (1i) étant comparatifs.

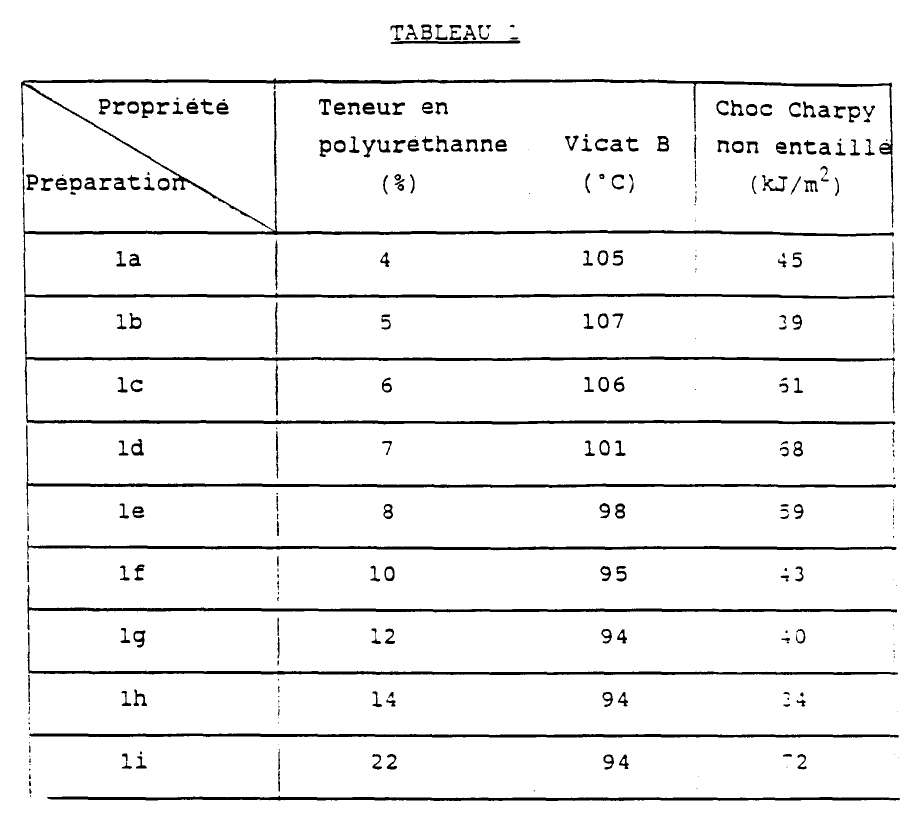

On peut noter que, pour la plaque obtenue à cet exemple, le point singulier se situe pour une teneur en polyuréthane de 7 % en poids. Pour cette valeur, la résistance au choc est de 68 kJ/m². Comme on peut le remarquer en examinant le tableau, pour une teneur de 7 % en poids de polyuréthane seulement, la résistance au choc est supérieure à celle obtenue pour des teneurs plus élevées en polyuréthane, ce qui est contraire à ce qu'on pouvait attendre.

Le module de flexion, déterminée pour la plaque à 7 % en polyuréthane est de 2300 MPa et la transmission lumineuse de 90 %. Pour une plaque, obtenue par exemple à partir de la préparation témoin 1i, comprenant une teneur en polyuréthane de 22 % en poids, le module de flexion est de 1300 MPa.

### EXEMPLE 2 :

Dans cet exemple on part de compositions utilisant, dans des proportions variées, les constituants de base des préparations de l'Exemple 1 précédent, le dégazage et le mélange des solutions A et B restant par ailleurs semblable ; par contre les solutions référencées (2a) à (2e) obtenues cette fois-ci sont coulées dans des moules constitués de deux plaques de verre dont le joint possède une épaisseur de 8 mm, permettant ainsi l'obtention de plaques coulées d'épaisseur 6 mm. Les moules, après remplissage, sont plongées dans un bac de polymérisation réglé à la température de 30°C, la température étant d'abord maintenue à cette valeur pendant 30 minutes, puis portée à 55°C pendant 45 minutes et maintenue à cette valeur pendant 8 heures. L'ensemble des moules est alors transféré dans une étuve à air où la température est portée à 115°C en 1 heure puis maintenue à cette valeur pendant 2 heures. On ramène ensuite la température à 50°C et on maintient celle-ci à cette valeur pendant 30 minutes avant de procéder finalement à l'amorçage puis au démoulage, obtenant ainsi des plaques coulées dont les teneurs en polyuréthanne varient de 4% à 22% en poids (voir Tableau 2 ci-après) ; les propriétés mesurées selon les méthodes définies dans l'Exemple 1 ont conduit aux résultats regroupés dans le Tableau 2 ci-après.

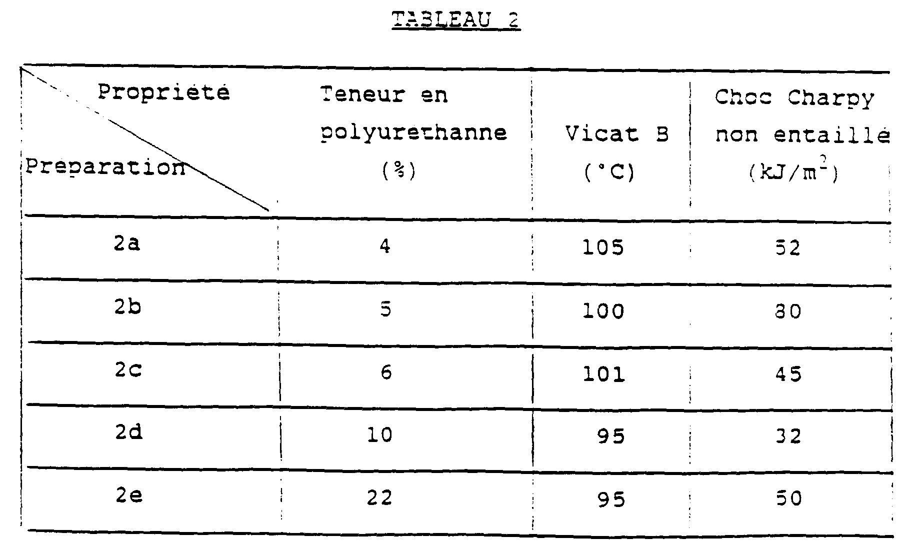

Dans cet exemple 2, le point singulier se situe pour une teneur en polyuréthane de 5 % en poids. Le module de flexion est de 2200 MPa.

### EXEMPLE 3

Dans une installation telle que celle représentée sur la figure en annexe on prépare, sous agitation, à une température de 20°C :
- d'une part une solution (A) comprenant 990 parties de méthacrylate de méthyle, 1 partie d'acide stéarique, 55,5 parties d'un mélange de polyoxypropylène/polyoxyéthylène triol commercialisé par la société ARCO sous la marque ARCOL 4042, 18,7 parties de TERATHANE® 2000, 12 parties de DESMODUR® N100, 0,41 partie de V65, 0,41 partie de V40 et 0,82 partie d'azo-bis-isobutyronitrile,
- d'autre part une solution (B) comprenant 1 000 parties de méthacrylate de méthyle, 0,2 partie de terpinolène, 24 parties de TINUVIN® 770 DF, 41 parties de diacrylate de butanediol et 10 parties de dibutyl dilaurate d'étain.

Ces deux solutions sont dégazées puis mélangées à poids égal avant d'être coulées dans un moule de même nature que celui décrit dans l'Exemple 1. On réalise en parallèle deux autres préparations référencées (3b) et (3c) en modifiant les proportions des différents constituants de base de manière à obtenir des plaques coulées dont les teneurs en polyuréthanne (données dans le Tableau 3 ci-après) sont respectivement de 7% à 10% en poids.

Toutes ces préparations, après avoir été soumises à des conditions opératoires identiques à celles décrites dans l'Exemple 1, conduisent à l'obtention de plaques coulées d'épaisseur 4 mm dont les résultats correspondants aux mesures de propriétés physiques selon les méthodes définies dans l'Exemple 1 sont regroupés dans le Tableau 3 ci-après.

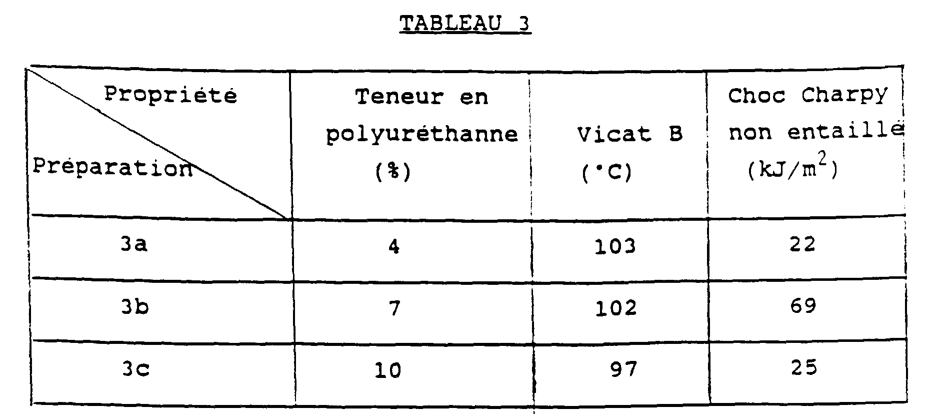

A l'exemple 3, le point singulier se situe pour une teneur en polyuréthane de 7 % en poids. Le module de flexion est de 2300 MPa.

### EXEMPLES 4a et 4b

Dans une installation telle que celle représentée à la figure en Annexe, on prépare, à la température de 20°C et sous agitation :
- une solution (A) comprenant 710 parties en poids de méthacrylate de méthyle, 90 parties en poids de polytétraméthylène éther glycol commercialisé par la Société du Pont de Nemours sous la marque Tetraphene 2000, 23,3 parties d'hexaméthylène diisocyanate trimérisé, 0,3 partie de 2,2'-azobis(2,4-diméthylvaléronitrile), 0,6 partie de 2,2'-azobisisobutyronitrile et 0,3 partie de 1,1'-azobis(cyclohexane-1-carbonitrile).
- une solution (B) comprenant 795 parties en poids de méthacrylate de méthyle, 0,2 partie de catalyseur dibutyldilaurate d'étain et 25 parties de diméthacrylate d'éthylèneglycol.

Ces deux solutions sont dégazées, puis, mélangées à poids égal avant d'être coulées dans un moule constitué par deux plaques de verre, comme celles utilisées à l'exemple 1, le joint possédant une épaisseur de 5 mm. Les moules, après remplissage, sont plongés dans un bac de polymérisation réglé à la température de 61°C. Cette température est maintenue pendant 4 heures. Le moule est ensuite transféré dans une étuve à air dans laquelle la température est portée à 115°C pendant 90 min. On ramène ensuite la température à 50°C et on la maintient pendant 60 min avant de procéder au démoulage. On obtient ainsi une plaque d'une épaisseur de 3,4 mm comprenant 7 % en poids de polyuréthane.

La résistance au choc (Charpy non entaillé) est de 60 kJ/m², le module de flexion de 2070 MPa, la température Vicat de 105°C. La transmission lumineuse est de 89 %.

On peut noter que, dans cet exemple, la plaque obtenue a un module de flexion inférieur à celui d'une plaque telle que celle de l'exemple 3, pour une même teneur (7 %) en polyuréthane. Cela vient du fait que dans l'exemple 4a, on utilise une quantité plus faible de catalyseur. L'utilisation d'une moins grande quantité de catalyseur présente un intérêt car, lorsque la teneur en catalyseur augmente, le vieillissement de la plaque obtenue est accéléré.

### EXEMPLE 4b

A titre de comparaison, on prépare une plaque coulée comme à l'exemple 4a, mais on modifie les quantités des différents constituants de base de manière à obtenir une plaque ayant une teneur en polyuréthane de 18 % en poids.

La résistance au choc est de 60kJ/m², le module de flexion de 1500 MPa, la température de Vicat de 94°C et la transmission lumineuse de 92 %.

Comme on peut le constater, la plaque selon l'invention à base de polyméthacrylate de méthyle et de polyuréthane, contenant une faible teneur en polyuréthane (7 %), présente non seulement une température de Vicat et un module de flexion plus élevés, mais aussi, et ceci d'une manière surprenante, une résistance au choc aussi grande que la plaque à teneur en polyuréthane à 18 % en poids.

## Revendications

1. Plaque coulée obtenue à partir d'une composition de polyméthacrylate de méthyle et de polyuréthane en proportions telles que le rapport des composants du réseau polyuréthane (c'est-à-dire la somme du ou des composé(s) organique(s) à fonctions isocyanates et du ou des polyol(s) à la somme de ces composants et du méthacrylate de méthyle) soit compris entre 3 % et 8 % en poids.

2. Plaque coulée conforme à la revendication 1, caractérisée en ce qu'elle présente une température de Vicat supérieure ou égale à 100° C et un module de flexion supérieur ou égal à 2 000 MPa.

3. Plaque coulée conforme à l'une des revendications 1 et 2, caractérisée en ce qu'elle a une épaisseur comprise entre 1,5 et 25 mm.

4. Procédé de fabrication de plaques coulées selon l'une des revendications 1 à 3, comprenant les étapes suivantes :
- dans une première étape, on prépare, séparément, d'une part une solution (A) de méthacrylate de méthyle comprenant une quantité efficace d'au moins un initiateur de polymérisation radicalaire, une quantité efficace d'au moins un composé organique comportant au moins deux fonctions isocyanates, au moins un polyol susceptible de constituer un réseau polyuréthane élastomérique avec les fonctions isocyanates du composé organique et, d'autre part, une solution (B) de méthacrylate de méthyle comprenant une quantité efficace d'au moins un agent de réticulation du méthacrylate de méthyle et une quantité efficace d'au moins un catalyseur susceptible de permettre la formation dudit réseau polyuréthane, puis
- dans une seconde étape, on mélange des solutions (A) et (B), puis
- dans une troisième étape, on introduit dans un moule le mélange obtenu au cours de la seconde étape, puis
- dans une quatrième étape, on soumet le moule contenant le mélange des solutions (A) et (B) à des conditions de pression et température propres à permettre successivement la formation du réseau polyuréthane puis la polymérisation du méthacrylate de méthyle dans ledit réseau, et
- dans une dernière étape, on laisse refroidir le mélange polymérisé dans le moule avant de procéder au démoulage de la plaque coulée, caractérisée en ce que le rapport des composants du réseau polyuréthane (c'est-à-dire la somme du ou des composé (s) organique (s) à fonctions isocyanates et du ou des polyol(s) à la somme de ces composants et du méthacrylate de méthyle soit compris entre 3 % et 8 % en poids.

5. Procédé conforme à la revendication 4, caractérisé en ce qu'au cours de la quatrième étape, le moule contenant les solutions (A) et (B) est soumis à une température de 30° C à 135° C à la pression atmosphérique.

6. Procédé conforme à la revendication 5, caractérisé en ce que le moule est soumis à un cycle de température non uniforme dans le temps.

## Claims

1. Cast sheet obtained from a composition of polymethyl methacrylate and polyurethane in such proportions that the ratio of the components of the polyurethane network (that is to say the sum of the organic compound(s) containing isocyanate functional groups and of the polyol(s) to the sum of these components and of the methyl methacrylate) is between 3 % and 8 % by weight.

2. Cast sheet in accordance with Claim 1, characterized in that it has a Vicat temperature which is higher than or equal to 100°C and a flexural modulus higher than or equal to 2 000 MPa.

3. Cast sheet in accordance with either of Claims 1 and 2, characterized in that it has a thickness of between 1.5 and 25 mm.

4. Process for the manufacture of cast sheets according to one of Claims 1 to 3, comprising the following stages:
- in a first stage there are separately prepared, on the one hand a solution (A) of methyl methacrylate comprising an effective quantity of at least one radical polymerization initiator, an effective quantity of at least one organic compound containing at least two isocyanate functional groups, at least one polyol capable of forming an elastomeric polyurethane network with the isocyanate functional groups of the organic compound and, on the other hand, a solution (B) of methyl methacrylate comprising an effective quantity of at least one crosslinking agent for methyl methacrylate and an effective quantity of at least one catalyst capable of permitting the formation of the said polyurethane network, then
- in a second stage solutions (A) and (B) are mixed, then
- in a third stage the mixture obtained during the second stage is introduced into a mould, then
- in a fourth stage the mould containing the mixture of the solutions (A) and (B) is subjected to pressure and temperature conditions which are such as to permit successively the formation of the polyurethane network and then the polymerization of the methyl methacrylate in the said network, and
- in a final stage the polymerized mixture is allowed to cool in the mould before the cast sheet is demoulded,
characterized in that the ratio of the components of the polyurethane network (that is to say the sum of the organic compound(s) containing isocyanate functional groups and of the polyol(s) to the sum of these components and of the methyl methacrylate) is between 3 % and 8 % by weight.

5. Process in accordance with Claim 4, characterized in that during the fourth stage the mould containing the solutions (A) and (B) is subjected to a temperature of 30°C to 135°C at atmospheric pressure.

6. Process in accordance with Claim 5, characterized in that the mould is subjected to a temperature cycle which is not uniform in time.

## Patentansprüche

1. Gußplatte, erhalten ausgehend von einer Zusammensetzung aus Polymethylmethacrylat und Polyurethan in solchen Mengen, daß das Verhältnis der Bestandteile des Polyurethannetzwerks (d.h. die Summe aus der oder den organischen Verbindungen mit Isocyanatfunktionen und des oder der Polyole zur Summe aus diesen Bestandteilen und dem Methylmethacrylat) zwischen 3 Gew.-% und 8 Gew.-% beträgt.

2. Gußplatte nach Anspruch 1, dadurch gekennzeichnet, daß sie eine Vicat-Temperatur oberhalb von oder gleich 100 °C und ein Elastizitätsmodul bei Biegung oberhalb von oder gleich 2.000 MPa aufweist.

3. Gußplatte nach einem der Ansprüche 1 und 2, dadurch gekennzeichnet, daß sie eine Dicke zwischen 1,5 und 25 mm aufweist.

4. Verfahren zur Herstellung von Gußplatten nach einem der Ansprüche 1 bis 3, das die folgenden Verfahrensschritte umfaßt:
- In einem ersten Verfahrensschritt stellt man, getrennt voneinander, einerseits eine Lösung (A) aus Methylmethacrylat her, enthaltend eine wirksame Menge mindestens eines radikalischen Polymerisationsinitiators, eine wirksame Menge mindestens einer organischen Verbindung mit mindestens zwei Isocyanatfunktionen, mindestens ein Polyol, das dazu geeignet ist, ein elastomeres Polyurethannetzwerk mit Isocyanatfunktionen der organischen Verbindung aufzubauen, und andererseits eine Lösung (B) aus Methylmethacrylat, enthaltend eine wirksame Menge mindestens eines Vernetzungsreagenzes für das Methylmethacrylat und eine wirksame Menge mindestens eines Katalysators, der geeignet ist, die Bildung des Polyurethannetzwerkes zu ermöglichen, dann
- in einem zweiten Schritt mischt man die Lösungen (A) und (B), dann
- in einem dritten Schritt bringt man die im Verlauf von Schritt zwei erhaltene Mischung in eine Form ein, dann
- in einem vierten Schritt unterwirft man die die Mischung aus den Lösungen (A) und (B) enthaltende Form Druck- und Temperaturbedingungen, die geeignet sind, allmählich die Bildung des Polyurethannetzes, dann die Polymerisation des Methylmethacrylats in diesem Netz herbeizuführen, und
- in einem letzten Schritt läßt man die polymerisierte Mischung in der Form vor Durchführung der Entformung der Gußplatte abkühlen,
dadurch gekennzeichnet, daß das Verhältnis der Bestandteile des Polyurethannetzwerkes, d.h. die Summe aus der oder den organischen Verbindungen mit Isocyanatfunktionen und des oder der Polyole zu der Summe aus diesen Bestandteilen und dem Methylmethacrylat) zwischen 3 Gew.-% und 8 Gew.-% beträgt.

5. Verfahren nach Anspruch 4, dadurch gekennzeichnet, daß im Verlauf des vierten Verfahrensschrittes die die Lösungen (A) und (B) enthaltende Form einer Temperatur von 30 °C bis 135 °C bei Atmosphärendruck unterworfen wird.

6. Verfahren nach Anspruch 5, dadurch gekennzeichnet, daß die Form einem zeitlich nicht einheitlichen Temperaturzyklus unterworfen wird.
